# EUROPEAN PATENT APPLICATION

(11) **EP 4 585 755 A1**
(43) Date of publication of application: **16.07.2025**
(21) Application number: 24169167.4
(22) Date of filing: 09.04.2024
(51) Int. Cl.: E02F 9/24, E02F 9/26

(54) **WORKING VEHICLE**

(30) Priority: 09.01.2024 JP 2024001313
(71) Applicant: Takeuchi Mfg. Co., Ltd., Nagano 389-0605 (JP)
(72) Inventor: MATSUMOTO, Tetsuya, Hanishina-gun 389-0605 (JP); TANAKA, Kenichi, Hanishina-gun, 389-0605 (JP); OGUMA, Kazunori, Hanishina-gun 389-0605 (JP)
(74) Representative: TBK

(57) **Abstract**

There is provided a working vehicle capable of further improving power consumption by preventing discharging of a battery in situations where discharging is unnecessary. A main controller (8) of a working vehicle (1) is operable when a set time (T1) has elapsed in a state where no input operation has been performed from a time when a lock lever (5c) was raised and operations of working units (7) via operation levers (5a) were disabled, to stop supplying of power from the battery (49) to a first driving unit (15) by turning off a relay (33) via a sub-controller (9).

## Description

### Technical Field

The present invention relates to a working vehicle.

### Background Art

A hydraulic excavator whose engine stops when a working unit has not been operated for a predetermined time has conventionally been proposed (refer to PTL1: Japanese Laid-open Patent Publication No. 2022-104124). An electric excavator whose driving power source stops when a locking operation that disables operation of the operation levers has been received has also been proposed (refer to PTL2: Japanese Laid-open Patent Publication No. 2023-070976).

### Summary of Invention

### Technical Problem

Electric motors are quieter than engines, which can make it difficult to tell whether power is still being supplied or whether the supplying of power has been stopped. For this reason, the operator may leave the supplying of battery power on, and if battery power continues to be supplied when the operator is not present, there will be an increase in wasteful power consumption due to the battery being discharged when not necessary.

### Solution to Problem

The present invention was conceived in view of the situation described above and has an object of providing a working vehicle capable of further improving power consumption by preventing discharging of a battery in situations where discharging is unnecessary.

An embodiment of the present invention solves the above problem using the configuration described below.

A working vehicle according to an aspect of the present invention includes a plurality of working units that operate on hydraulic pressure; a driving unit that drives the working units; a battery; a main controller; a sub-controller; a plurality of operation levers; and a lock lever.

The main controller is operable when a set time has elapsed in a state where no input operation has been performed from a time when a lock lever was raised and operations of the working units via the operation levers were disabled, to stop supplying of power from the battery to the driving unit by turning off a relay via the sub-controller.

With the above configuration, when the set time elapses in a state where no input operation of a display unit, an operation switch section, or the like has been performed, the machine shuts down by the main controller. By doing so, it is possible to prevent a battery from continuing to discharge when the operator is not present.

As one example, it is effective for the main controller to be operable when the lock lever has been lowered and a start switch has been pressed, to turn on the relay via the sub-controller to start supplying power from the battery to the driving unit, to start operation of the driving unit in a state where a passcode has been authenticated, and to enable the working units to be operated by the operation lever.

As one example, it is effective for the main controller to be operable when there has been an input operation in a period before the set time is reached, to keep the relay in an on-state.

### Advantageous Effects of Invention

According to the present invention, a working vehicle capable of further improving power consumption by preventing discharging of a battery in situations where discharging is unnecessary can be realized.

### Brief Description of Drawings

FIG. 1 is a schematic perspective view depicting one example of a working vehicle according to an embodiment.
FIG. 2 is a schematic circuit diagram depicting an example of a driving control system of the working vehicle depicted in FIG. 1.
FIG. 3 is a simplified circuit diagram depicting one example of a control system in a periphery of a start switch appearing in FIG. 2.
FIG. 4 is a flowchart depicting an overview of an example control procedure for the working vehicle depicted in FIG. 1.
FIG. 5 is a simplified timing chart depicting a first example of a control operation for the working vehicle depicted in FIG. 1.
FIG. 6 is a simplified timing chart depicting a second example of a control operation for the working vehicle depicted in FIG. 1.

### Description of Embodiments

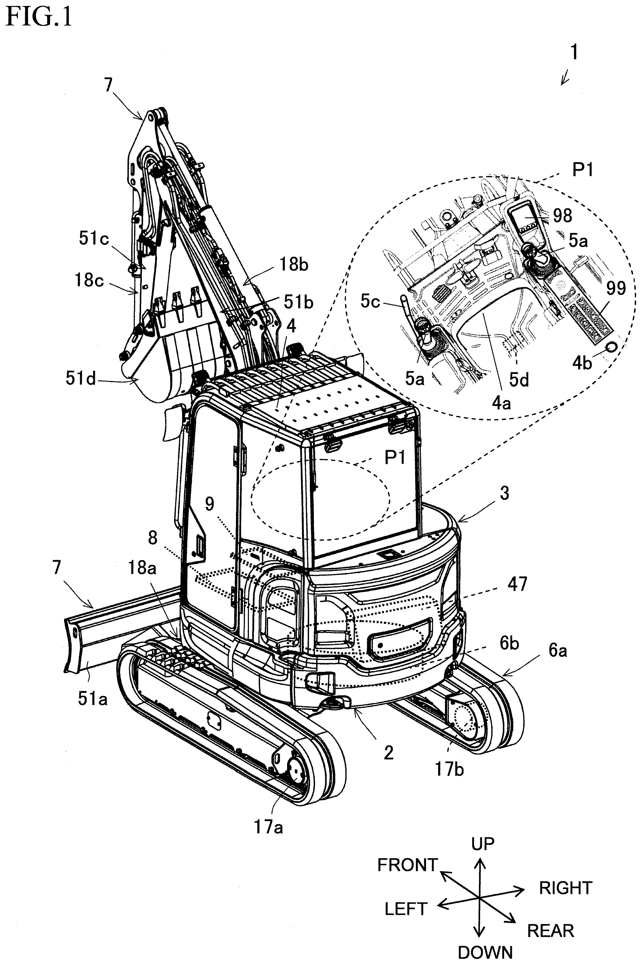

Several embodiments of the present invention will now be described in detail with reference to the attached drawings. FIG. 1 is a perspective view, from rear upper left, that schematically depicts one example of a working vehicle 1 according to the present embodiment. A hydraulic excavator will be described here as one example. As other example configurations, the working vehicle 1 may be a track loader or a tracked dumper. In addition, members with the same function are denoted by the same reference signs in the drawings used to describe the present embodiments and may not be repeatedly described.

As depicted in FIG. 1, the working vehicle 1 is provided with a lower body 2 capable of travelling and an upper body 3 that is mounted on the lower body 2 and is capable of slewing. The lower body 2 includes a travel unit 6a and the upper body 3 includes a cab 4. Here, the part surrounded by a broken line P1 in FIG. 1 is a schematic view of a principal part of the cab 4.

As one example, the travel unit 6a includes a left and right pair of crawlers. The travel unit 6a includes a hydraulic motor 17a that is a left side driver unit and a hydraulic motor 17b that is a right side driver unit. As an alternative configuration, a travel unit equipped with tires may be used.

The working vehicle 1 includes a battery 49 that supplies electrical power. The battery 49 incorporates a battery pack 47. The working vehicle 1 includes a display unit 98. The display unit 98 is configured to display operation information for a first driving unit 15 and a second driving unit 16, remaining charge information for the battery pack 47, and other well-known vehicle information. An on-board charger is also provided (not illustrated).

As one example, the cab 4 includes a seat 4a where the operator boards and sits the vehicle, a lock lever 5c disposed to the left of the seat 4a, and the display unit 98 disposed to the right of the seat 4a. The cab 4 also includes operation levers 5a disposed on the left and right of the seat 4a.

As one example, a seat switch 5d is disposed below the seat 4a and a start switch 4b is disposed to the right of the seat 4a. The seat switch 5d is a mechanical switch or a pressure-sensitive switch that is activated by the operator's weight when the operator sits on the seat 4a. The start switch 4b is a push switch used for both starting and stopping the working vehicle 1.

As one example, an operation switch section 99 is disposed on the right of the seat 4a. As one example, the operation switch section 99 includes one or more of a jog dial, a tactile switch, a lever switch, a push switch, a pressure-sensitive switch, and a touch panel.

As one example, the operation switch section 99 includes one or more of an eco mode selection switch, a lift alarm activation switch, a beacon switch, a detent switch, a deceleration switch, a light switch, a wiper switch, and a washer switch.

The working vehicle 1 includes a plurality of working units 7. The plurality of working units 7 are all operated by hydraulic pressure (that is, hydraulic oil at a predetermined pressure).

As one example, the working units 7 include a blade 51a. The blade 51a is swung in the vertical direction with respect to the lower body 2 by a blade cylinder 18a. An arm 51c is swung vertically relative to a boom 51b by an arm cylinder 18b.

One example of a working unit 7 includes the boom 51b, the arm 51c, and an attachment 51d. The boom 51b is attached to the upper body 3 so as to be capable of swinging in the forward and backward direction or the forward and backward direction including an upward and downward component. The arm 51c is attached to the boom 5 1b so as to be capable of swinging in the forward and backward direction or the forward and backward direction including an upward and downward component. The attachment 51d is attached to the arm 51c so as to be capable of swinging in the forward and backward direction or the forward and backward direction including an upward and downward component.

As one example, the attachment 51d is a bucket that is swung forward and backward relative to the arm 51c by a bucket cylinder 18c. As one example, the boom 5 1b is swung forward and backward relative to the upper body 3 by a boom cylinder and is swung left and right relative to the upper body 3 by a swing cylinder (not illustrated).

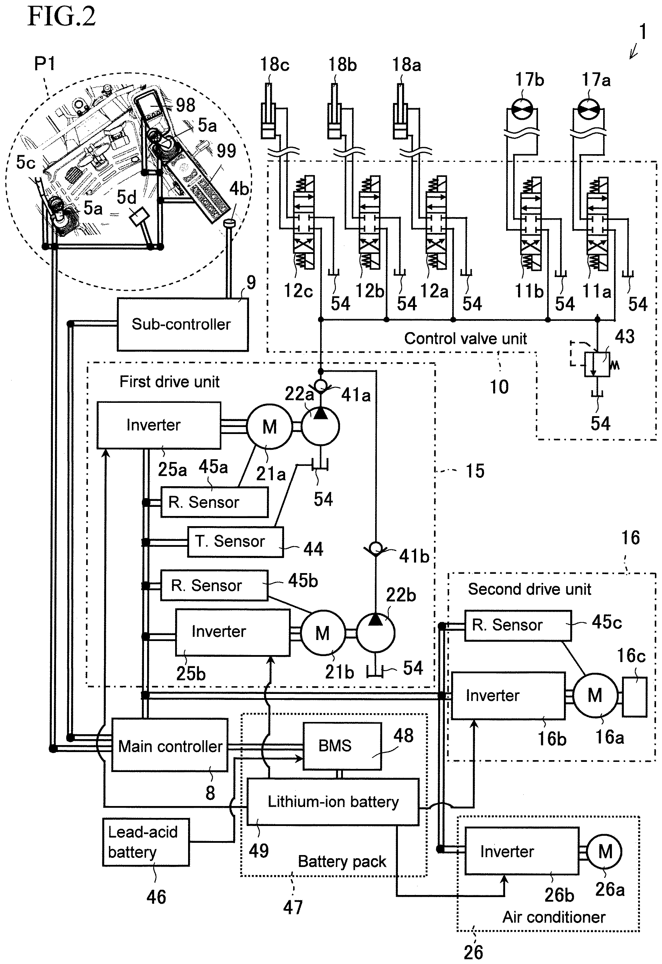

FIG. 2 is a schematic circuit diagram depicting an example of a driving control system of the working vehicle 1. The working vehicle 1 includes the travelling hydraulic motor 17a and the travelling hydraulic motor 17b, and a first driving unit 15 that supplies hydraulic oil at a predetermined pressure to the blade cylinder 18a, the arm cylinder 18b, and the bucket cylinder 18c. Note that some parts of the circuit diagram in FIG. 2 aside from the principal part have not been labelled.

The working vehicle 1 includes a slewing unit 6b that is operated by the second driving unit 16. As one example, the second driving unit 16 includes a slewing electric motor 16a that is combined with a speed reducer 16c so that a pinion gear of the speed reducer 16c meshes with a slew bearing of the lower body 2 (not illustrated).

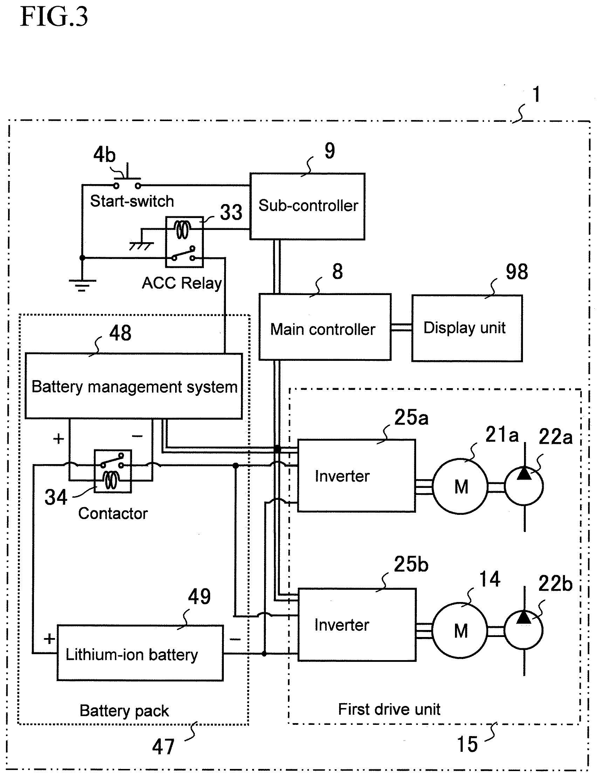

As depicted in FIG. 2 and FIG. 3, the working vehicle 1 includes the battery pack 47. The battery pack 47 is removably mounted on the working vehicle 1. As one example, the battery pack 47 includes a battery management system 48, the battery 49, and a contactor 34.

As one example, the battery 49 is a lithium-ion battery in which a plurality of cells are combined. The power supply voltage of the battery 49 is 60 to 800 V, for example. Although various sensors are incorporated into the battery pack 47, their wiring diagrams have been omitted from the drawings. As one example, the working vehicle 1 includes a lead-acid battery 46 that powers the battery management system 48 during startup.

The working vehicle 1 starts when the start switch 4b is pressed by the operator. The working vehicle 1 includes a main controller 8 (or "vehicle controller") and a sub-controller 9 (or "switch assembly controller"). The main controller 8 transmits a power supplying start signal to the sub-controller 9 when the start switch 4b is pressed, and the sub-controller 9 that has received this power supplying start signal turns on a relay 33.

When the relay 33 is turned on, the battery management system 48 turns on the contactor 34. When the contactor 34 is on, the supplying of power from the battery 49 to the first driving unit 15 and the second driving unit 16 is started. After supplying of power has started, the operator operates the operation levers 5a to operate the travel unit 6a, the slewing unit 6b, and the working unit 7.

When the operator has operated the operation levers 5a, an operation signal is sent to the main controller 8, and the main controller 8 that has received the operation signal operates the first driving unit 15 and the second driving unit 16. Controller Area Network (CAN) is used as the communication protocol for vehicle control including the main controller 8 and the sub-controller 9. As one example, the relay 33 is an accessory relay connected to an accessory power source.

The first driving unit 15 includes a first hydraulic pump 22a that draws in and expels hydraulic oil held in a hydraulic oil tank 54. The first driving unit 15 also includes a first electric motor 21a that drives the first hydraulic pump 22a and a first inverter 25a that supplies power to the first electric motor 21a according to an instruction from the main controller 8.

The first driving unit 15 includes a second hydraulic pump 22b that draws in and expels the hydraulic oil held in the hydraulic oil tank 54. The first driving unit 15 also includes a second electric motor 21b that drives a second hydraulic pump 22b and a second inverter 25b that supplies power to the second electric motor 21b according to an instruction from the main controller 8.

As one example, the first driving unit 15 is configured so that a first output section of the first hydraulic pump 22a and a second output section of the second hydraulic pump 22b are combined to discharges hydraulic oil to a primary side of a control valve unit 10.

At the control valve unit 10, the primary sides of a plurality of control valves are connected in parallel. In the example in FIG. 2, the primary sides of the hydraulic motor control valves 11a, 11b and the hydraulic cylinder control valves 12a, 12b, and 12c are connected in parallel. The number of each type of control valve used to construct the control valve unit 10 may be increased or decreased.

The control valve unit 10 includes a relief valve 43, and the primary side of the relief valve 43 is connected in parallel to the primary side of each control valve. The secondary side of the relief valve 43 acts as a return flow path on which hydraulic oil that exceeds a set pressure is returned to the hydraulic oil tank 54.

As one example, the primary side of the first check valve 41a is connected to the output side of the first hydraulic pump 22a, and the primary side of the second check valve 41b is connected to the output side of the second hydraulic pump 22b. The secondary side of the first check valve 41a and the secondary side of the second check valve 41b are combined and connected to the primary side of the control valve unit 10. As one example, the first hydraulic pump 22a and the second hydraulic pump 22b are both fixed displacement gear pumps. As one example, the first electric motor 21a and the second electric motor 21b are both embedded magnet motors.

The first driving unit 15 includes a rotation speed sensor 45a that detects the rotation speed of the first electric motor 21a and a rotation speed sensor 45b that detects the rotation speed of the second electric motor 21b. The first driving unit 15 includes a temperature sensor 44 that detects the temperature of the hydraulic oil held in the hydraulic oil tank 54.

The second driving unit 16 includes the slewing electric motor 16a that is combined with the speed reducer 16c and the slewing inverter 16b that supplies power to the slewing electric motor 16a according to an instruction from a main controller 8. The second driving unit 16 includes a rotation speed sensor 45c that detects the rotation speed of the slewing electric motor 16a.

As one example, the cab 4 is equipped with an air conditioner 26. The air conditioner 26 includes an air conditioner electric motor 26a and an air conditioner inverter 26b that supplies power to the air conditioner electric motor 26a according to an instruction from the main controller 8.

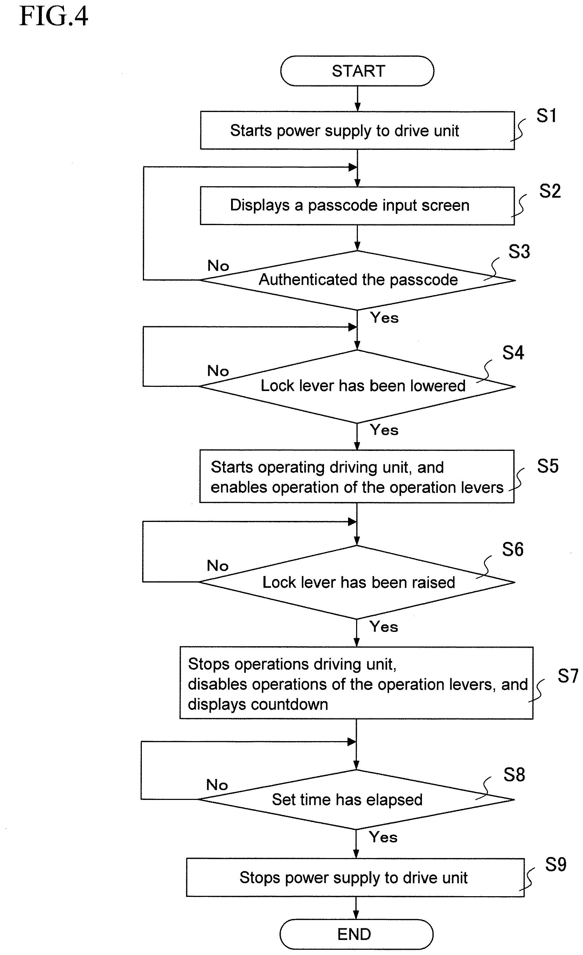

FIG. 4 is a flowchart depicting a simplified overview of an example control procedure by the main controller 8 and the sub-controller 9 of the working vehicle 1. The control procedure depicted in FIG. 4 is composed of steps S1 to S9. Next, the control procedure of the working vehicle 1 will be described.

In step S1 in FIG. 4, the main controller 8 transmits a power supplying start signal to the sub-controller 9 when the start switch 4b is pressed. The sub-controller 9 that received the power supplying start signal then turns on the relay 33. When the relay 33 is turned on, the supplying of power from the battery 49 to the first driving unit 15 and the second driving unit 16 starts. When supplying of power has commenced, the processing proceeds to step S2.

In step S2 in FIG. 4, the main controller 8 displays a passcode input screen on the display unit 98. When the passcode input screen has been displayed, the processing proceeds to step S3.

In step S3 in FIG. 4, the main controller 8 authenticates a passcode inputted by the operator. When the main controller 8 has authenticated the passcode, the processing proceeds to step S4. On the other hand, when the main controller 8 has not authenticated the passcode, the processing returns to step S2 and the passcode input screen is displayed again. Alternatively, the processing returns to step S2 and displays the passcode input screen again while displaying an error message.

In step S4 in FIG. 4, the main controller 8 determines whether the lock lever 5c has been lowered. When the main controller 8 has determined that the lock lever 5c has been lowered, the processing proceeds to step S5. On the other hand, when the main controller 8 has determined that the lock lever 5c has not been lowered, the processing returns to step S4.

In step S5 in FIG. 4, the main controller 8 starts operating the first driving unit 15 and the second driving unit 16, enables operation of the plurality of operation levers 5a, and proceeds to step S6.

In step S6 in FIG. 4, the main controller 8 determines whether the lock lever 5c has been raised. When the main controller 8 has determined that the lock lever 5c has been raised, the processing proceeds to step S7. On the other hand, when the main controller 8 has determined that the lock lever 5c has not been raised, the processing returns to step S6.

In step S7 in FIG. 4, the main controller 8 stops operations of the first driving unit 15 and the second driving unit 16, disables operations of the operation levers 5a, and displays a countdown on the display unit 98, with the processing proceeding to step S8. This countdown display will be described later.

In step S8 in FIG. 4, the main controller 8 determines whether a set time T1 has elapsed. When the main controller 8 has determined that the set time T1 has elapsed, the processing proceeds to step S9. On the other hand, when the main controller 8 has determined that the set time T1 has not elapsed, the processing returns to step S8.

In step S9 in FIG. 4, the main controller 8 transmits a power supplying stop signal to the sub-controller 9. The sub-controller 9 that received the power supplying stop signal turns off the relay 33. When the relay 33 is turned off, the supplying of power from the battery 49 to the first driving unit 15 and the second driving unit 16 is stopped.

Next, a timing chart that schematically depicts driving control in the working vehicle 1 will be described.

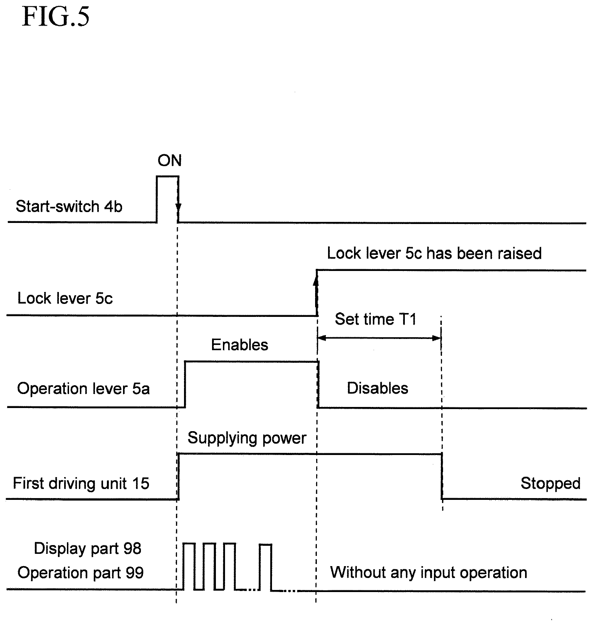

FIG. 5 is a first example of a timing chart. This first example indicates that when the set time T1 has elapsed without any input operation from the time when operations of the working units 7 by the operation levers 5a were disabled, the supplying of power to the first driving unit 15 and the second driving unit 16 is stopped.

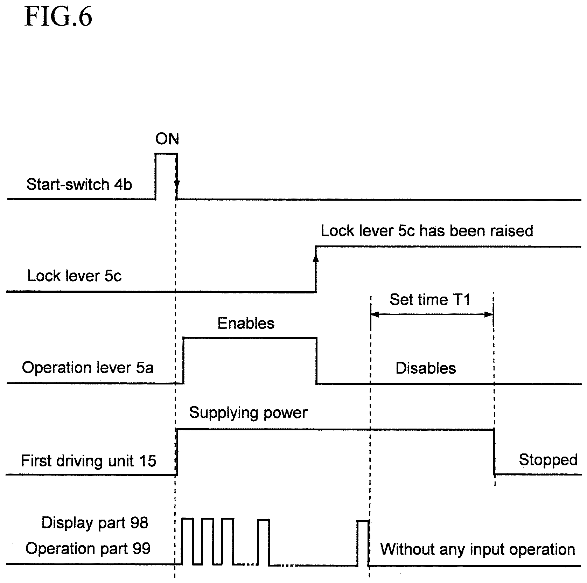

FIG. 6 is a second example of a timing chart. This second example is an example where an input operation is performed before the set time T1 elapses starting from when operations of the working units 7 by the operation levers 5a were disabled. The second example indicates that supplying of power to the first driving unit 15 and the second driving unit 16 is stopped when the set time T1 has elapsed from the end of the most recent input operation.

In step S7 in FIG. 4, if an input operation is performed before the set time T1 elapses, the main controller 8 resets the countdown to the set time T1 and starts counting again from the time when this input operation was performed.

According to this configuration, the relay 33 is kept in the on-state due to the operator operating the touch panel, operation buttons, or the like on the display unit 98 or operating various switches of the operation switch section 99. An automatic shutdown of the machine is not executed, and the countdown to the set time T1 is restarted from zero. By doing so, it is possible to respond flexibly to how the operator is operating the machine and make the machine easier to use.

As one example, the countdown display mentioned above is performed by highlighting an icon, by making an icon blink, or by changing the color of an icon, for example from yellow to red, in a predetermined screen on the display unit 98.

As one example, the main controller 8 highlights an icon when a countdown toward the set time T1 has commenced. After this, the main controller 8 causes the icon to blink when one minute has elapsed from the start of the countdown toward the set time T1. This set time T1 can be changed using a service tool.

As one example, in step S2 in FIG. 4, implementation or non-implementation of an auto-shutdown can be stored in a database for each passcode of a logged-in user.

The auto-shutdown setting status can be inherited the next time the machine starts up.

In addition to the configuration described above, it is also possible to use a configuration where the supplying of power from the battery 49 to the first driving unit 15 and the second driving unit 16 is stopped when the set time T1 has elapsed without any input operation and without the seat switch 5d being activated.

In addition to the above configuration, it is also possible to use a configuration where the countdown toward the set time T1 is reset if the seat switch 5d is activated before the set time T1 has elapsed, with the countdown restarting from the time at which the seat switch 5d was activated.

With the working vehicle 1 according to the present embodiment described above, power consumption by the first electric motor 21a and the second electric motor 21b can be significantly improved. Limiting supplying time to the first electric motor 21a and the second electric motor 21b in a state where no predetermined input operation is performed also improves safety.

Note that the driving power source of the working vehicle 1 is not limited to the configuration described above, and it is also possible to use an engine in addition to electric motors. The battery of the working vehicle 1 is also not limited to the configuration described above, and a well-known secondary battery, such as a nickel-metal hydride battery, may be used. In this way, appropriate changes may be made to the working vehicle 1 according to its specification and the like.

There is provided a working vehicle capable of further improving power consumption by preventing discharging of a battery in situations where discharging is unnecessary. A main controller (8) of a working vehicle (1) is operable when a set time (T 1) has elapsed in a state where no input operation has been performed from a time when a lock lever (5c) was raised and operations of working units (7) via operation levers (5a) were disabled, to stop supplying of power from the battery (49) to a first driving unit (15) by turning off a relay (33) via a sub-controller (9).

## Claims

1. A working vehicle (1) comprising:
a plurality of working units (7) that operate on hydraulic pressure;
a driving unit (15) that drives the working units (7);
a battery (49);
a main controller (8);
a sub-controller (9);
a plurality of operation levers (5a); and
a lock lever (5c),
wherein the main controller (8) is operable when a set time (T1) has elapsed in a state where no input operation has been performed from a time when the lock lever (5c) was raised and operations of the working units (7) via the operation levers (5a) were disabled, to stop supplying of power from the battery (49) to the driving unit (15) by turning off a relay (33) via the sub-controller (9).

2. The working vehicle (1) according to claim 1,
wherein the main controller (8) is operable when the lock lever (5c) has been lowered and a start switch (4b) has been pressed, to turn on the relay (33) via the sub-controller (9) to start supplying power from the battery (49) to the driving unit (15), starts operation of the driving unit (15) in a state where a passcode has been authenticated, and enables the working units (7) to be operated by the operation levers (5a).

3. The working vehicle (1) according to claim 2,
wherein the main controller (8) is operable when there has been an input operation in a period before the set time (ST1) is reached, to keep the relay (33) in an on-state.
